# NEW EUROPEAN PATENT SPECIFICATION

(11) **EP 2 815 902 B2**
(45) Date of publication and mention of the opposition decision: **14.07.2021**
(45) Mention of the grant of the patent: 08.08.2018
(21) Application number: 14002082.7
(22) Date of filing: 17.06.2014
(51) Int. Cl.: B60G 13/00, A01D 67/00, A01D 75/28, B62D 55/04

(54) **Suspension system for a self-propelled harvesting machine with tracks**
Aufhängungssystem für eine selbstfahrende Erntemaschine mit Ketten
Système de suspension pour une machine de récolte autotractée pourvue de chenilles

(30) Priority: 20.06.2013 GB 201311024
(43) Date of publication of application: 24.12.2014
(73) Proprietor: Agco A/s, 8900 Randers (DK)
(72) Inventor: Bojsen, Thomas, 113-115 Randers (DK)
(74) Representative: AGCO Intellectual Property Department

(56) References cited:
- EP-A1- 0 958 730
- EP-A1- 1 018 294
- WO-A1-2006/018215
- DE-A1- 4 115 311
- DE-A1- 4 138 208
- DE-A1- 19 919 959
- US-A- 5 896 731
- US-A1- 2002 109 400
- US-A1- 2007 017 714
- US-B2- 8 341 926

## Description

The invention relates to self-propelled harvesting machines and particularly to the provision of suspension for ground engaging tracks.

Self-propelled harvesting machines include by way of example combine harvesters, forage harvesters, and sugar-cane harvesters. Over many years the size and weight of machines has increased significantly driven by a demand for greater processing capacity. Offsetting this demand for larger machines, there is a growing awareness of the damage and problems caused by high ground pressures exerted by the footprint of the machines upon the fields. For example, soil compaction can increase runoff of rainfall, in turn resulting in irreversible erosion. Moreover, the risk of getting stuck in wet field conditions is increased for machines with higher ground pressures.

Reduction of the ground pressure by reducing the weight of these harvesting machines can only be exploited to a limited extent without overly affecting the machine capacity. Instead, manufacturers have resorted to increasing the machine footprint by using larger wheels and, more recently, ground engaging tracks.

Despite the advantages offered, the ride comfort provided by tracked harvesters is noticeably inferior to equivalent machines with wheels. US-8,341,926 discloses a self-propelled harvesting machine having a crawler track assembly provided with a damping system. The mechanism by which the track assembly is mounted to the axle is not disclosed. US-2007/0017714 discloses a track assembly for a variety of all terrain vehicles, the assembly including idler wheel suspension for the track.

There is a desire by manufacturers to find cheaper, simpler and more robust suspension systems for tracked harvesting machines.

Therefore, it is one object of the invention to provide an improved suspension system for a self-propelled harvesting machine which can be employed for track assemblies. A self-propelled harvesting machine comprising a suspension system and a crawler track assembly according to the pre-characterising portion of claim 1 is described in European patent application EP 1 018 294 A1.

In accordance with the invention there is provided a self-propelled harvesting machine comprising a suspension system and a crawler track assembly as recited in claim 1 of the attached claims.

By providing a final drive unit which pivots around an input shaft a vertical degree of freedom is provided for the crawler track assembly in a compact and robust construction. Furthermore, the damper simply cushions the rotational movement of the final drive relative to the chassis.

The track assembly typically comprises an endless ground-engaging belt wrapped around a plurality of wheels, at least one of which is a propulsion wheel driven by an external driving torque and at least two of which are idler wheels. The track assembly may also comprises a bogie truck upon which the propulsion wheel and idler wheels are supported to maintain a spatial relationship between those wheels. The propulsion wheel is preferably mounted directly onto the attachment hub of the suspension system. The provision of a damper between the chassis and the final drive in accordance with the invention results in damping of the entire track assembly relative to the vehicle chassis.

The damper comprises a fluid-filled cylinder which can be conveniently connected between the chassis and the final drive by appropriate attachment means. The fluid may be compressed air, but more preferably hydraulic fluid.

The accumulator is preferably a nitrogen charged accumulator. The parallel-connected accumulators charged with different pressures provide a multi-mode damping function to the vehicle to cater for different operating conditions, for example a transport (unloaded) condition and an operating (loaded) condition.

The control circuit preferably comprises a check valve connected in parallel with a throttle valve between the cylinder and the accumulator (or accumulators). The throttle valve provides a damping effect in one direction of cylinder travel whilst the check valve permits the cylinder to return to the rest position rapidly.

The hydraulic control circuit may be a closed circuit or an open circuit, the latter including a pump/drain means to adjust the resting position of the cylinder piston. The cylinder may be dual-acting or single-acting, wherein the former permits a more accurate control of the cylinder action and is preferred for some final drive geometries.

Further advantages of the invention will become apparent from reading the following description of specific embodiments with reference to the appended drawings in which:
Figure 1 is an upper front left perspective view of a combine harvester fitted with a pair of track suspension systems in accordance with the invention, the body of the combine shown in ghost form;
Figure 2 is an upper front left perspective view of the front axle, suspension systems and associated track units of the combine harvester of Figure 1;
Figure 3 is an upper front left perspective view of the front axle and suspension systems of Figure 2 shown with the track units removed;
Figure 4 is an upper left rear perspective view of the left-hand suspension system of Figure 2;
Figure 5 is a left side elevation of the left-hand suspension system of Figure 2;
Figure 6 is a right rear perspective view of the left-hand suspension system of Figure 2;
Figure 7 is right hand view from the section VII-VII of Figure 3;
Figure 8 shows, for illustrative purposes only, and outside the scope of the present invention, a hydraulic circuit for controlling the suspension systems such as those illustrated in Figures 1 to 7; and,
Figure 9 shows a hydraulic circuit for controlling the suspension systems illustrated in Figures 1 to 7 in a system according to the present invention.

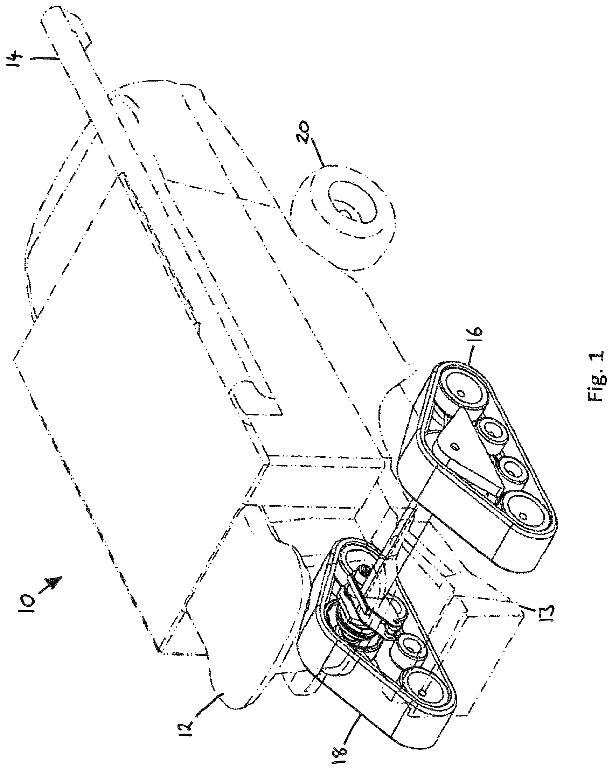

With reference to Figure 1 a combine harvester 10 comprises a cab 12, elevator housing 13, unloading auger 14, left and right track units 16,18, and steerable rear wheels 20 (only one of which is shown). A header, for cutting and gathering a standing crop as the machine is advanced across a field, can be attached to the front of elevator housing 13 in a known manner. However, the header is not shown in the drawings provided.

Although explained in relation to a combine harvester, it should be understood that the suspension system described hereinafter can be adopted on other self propelled harvesting machines without significant effort including forage harvesters and sugar cane for example.

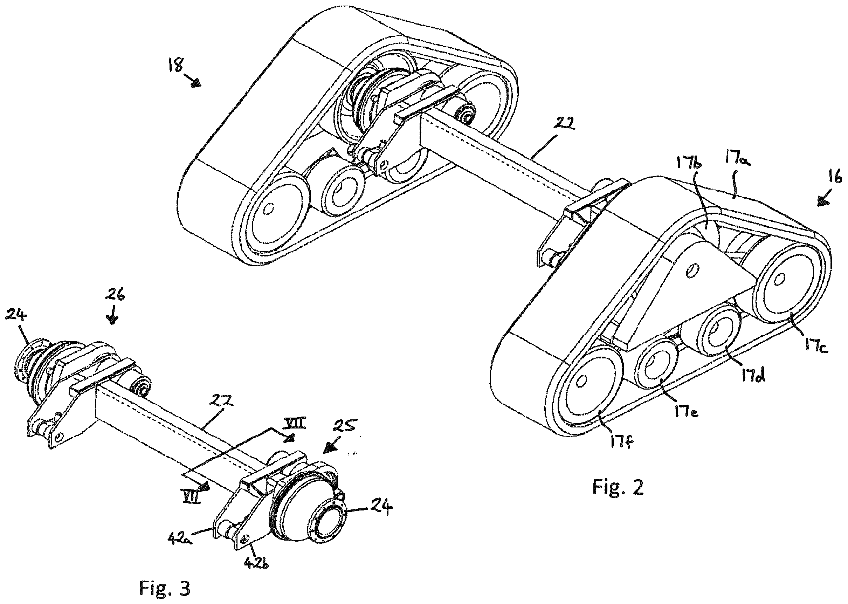

With reference to Figure 2, each track assembly 16,18 comprises an endless ground-engaging belt 17a wrapped around a propulsion (or driving) wheel 17b and four idler wheels 17c-17f. The wheels 17b-17f are mounted on a bogie truck (or track frame) 17g which maintains a spatial relationship between the wheels. The idler wheels 17c-17f may be mounted to the bogie truck by independent damped suspension arms (not shown) as is known in the art, from WO-2006/018215 for example.

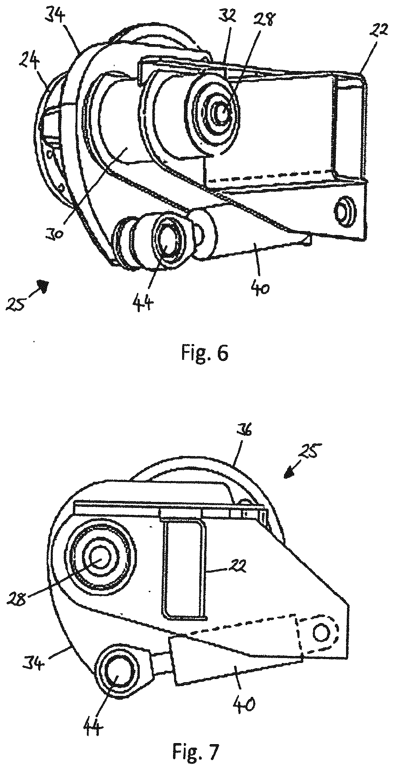

Turning to Figures 2 to 7, a left-hand suspension system 25 and a right-hand suspension system 26 are secured at either end of a transverse frame member or axle 22 which forms part of the vehicle chassis. The axle 22 is shown as a rectangular box section beam but it should be understood that the axle 22 may take other forms of construction such as an I-section beam. Each suspension assembly 25, 26 presents an attachment hub 24 to which the propulsion wheel 17b of each respective track unit 16, 18 is secured. However, in an alternative arrangement, a ground-engaging wheel may be secured directly to the attachment hub 24.

For sake of simple explanation, only the left-hand suspension assembly 25 will be described hereinafter. However, it should be understood that the construction of the right-hand suspension assembly 26 is effectively a mirror image of that described.

Left-hand suspension system 25 comprises a final drive unit which itself comprises an input shaft 28 which is drivingly connected to an engine via a gear box (not shown). The construction of the final drive unit is similar to that of a construction of hillside combine described in EP-0,698,338 to which reference is invited.

The input shaft 28 extends transversely with respect to the forward direction of travel of the combine 10 and is supported for rotation by a bearing unit 30 which is secured to the axle 22 by means of a welded bracket 32. Connected to a torque source such as an engine or electric motor via a gearbox (not shown) the input shaft 28 and serves to convey a driving torque to the final drive and the track units.

The input shaft 28 extends through the casing 34 of the final drive unit 25, the casing 34 enclosing a pair of gears (not shown), one of which is keyed to and driven by the input shaft 28. The second gear within the housing 34 meshes with the first gear and is keyed on to an output shaft which extends outwardly from the combine and drives the attachment hub 24. An outer housing 36 has a circular body which is concentric with the output shaft and attachment hub 24 and comprises an integral extension part 36a which is journalled onto the outer end of input shaft 28.

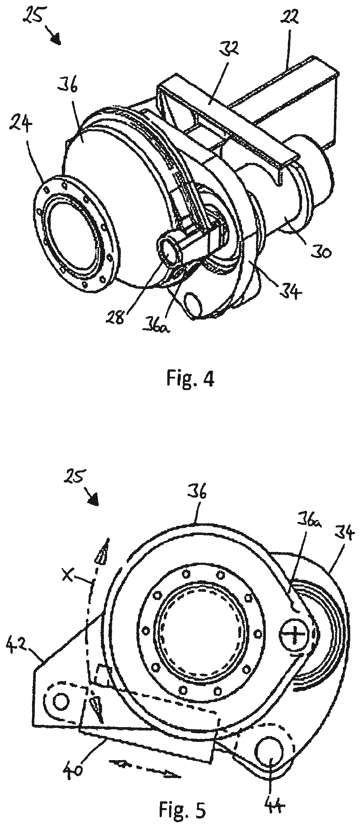

The components 34, 36 of the final drive housing together with the attachment hub 24 are arranged to pivot around an axis defined by the input shaft 28 in a direction indicated by arrow X in Figure 5. Movement of the final drive 25 around input shaft 28 away from a resting position is damped by damping cylinder 40 which is connected at a front end to a bracket 42 formed from two parallel plates 42a, 42b welded to the axle 24, and at a rear end to the housing 34 by a pin 44 which permits pivoting movement.

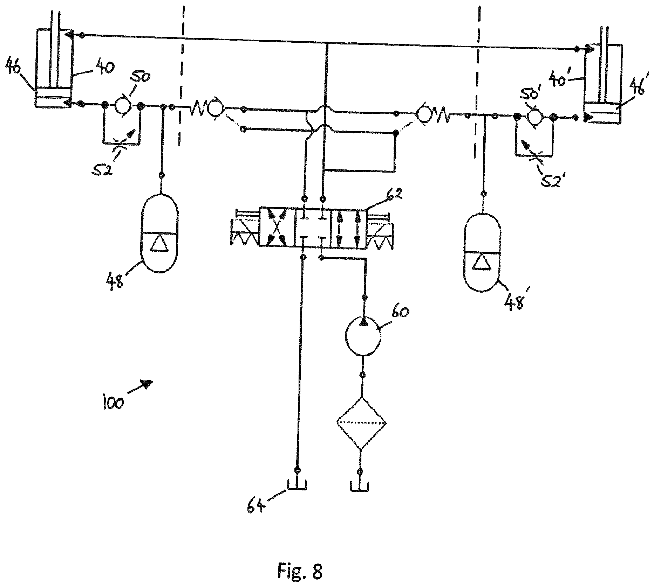

Damping cylinder 40 forms part of a background (non-invention) configuration of hydraulic circuit 100 shown in Figure 8 together with the equivalent right-hand cylinder 40'. Each damping cylinder 40, 40' is dual-acting wherein one side of each piston 46, 46' is connected to a nitrogen-charged accumulator 48, 48' via a respective check valve 50, 50' and a throttle valve 52, 52'.

In operation, undulations in the terrain encountered will cause the ground-engaging track units 16, 18 to rise up and down. To limit transfer of the vertical motion, and the resultant discomfort, to the driver, such motion is accommodated by the pivoting final drive mechanism described above and damped by the associated cylinders 40, 40'. The pre-charged accumulators 48, 48' determine the stiffness in the freedom of movement of the final drives whilst the throttle valves 52, 52' damp said motion.

In addition to damping functionality, the hydraulic circuit 100 comprises means to adjust the position of the pistons 46,46' in the respective cylinders and thus the resting position of the suspension.

A pump 60 and tank 64 are connected to the cylinders 40, 40' via a solenoid-actuated three-position directional control valve 62. The pump 60 is driven mechanically and derives a driving torque from the engine of the harvester in a known manner. The directional control valve 62 controls the delivery of pressurised fluid to and from the pump 60 and tank 64 in response to electrical control signals that activate the solenoids. The electrical control signals may be generated automatically in response to sensed parameters or manually by the operator.

When in the centre position as shown in Figure 8, the directional control valve 62 closes off the hydraulic connection to the pump and tank 60, 64. When displaced to either of the other two positions, pressurised hydraulic fluid is conveyed to one side of each cylinder 40, 40' to adjust the resting position.

In a simplified embodiment, the pump 60, tank 64 and valve 62 may be omitted leaving a closed circuit for each cylinder 40, 40' in which the resting position cannot be adjusted.

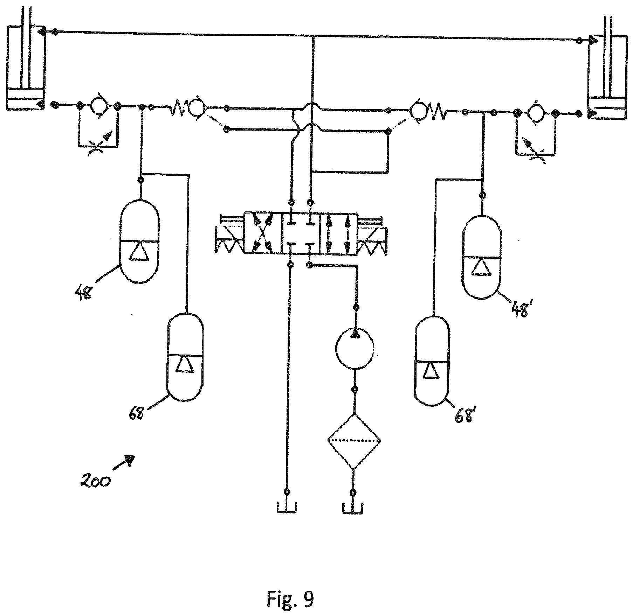

The overall weight of the combine harvester when being transported is significantly less than when in operation. In a transport mode the header is detached and the grain bins are typically empty. When in operation the attached header and carried grain add a significant additional load to the chassis. To accommodate the changes in machine weight, additional accumulators 68, 68' are connected in parallel to the aforementioned accumulators 48, 48' as shown in the hydraulic circuit 200 embodying aspects of the present invention and illustrated in Figure 9.

By way of example only, each of the first pair of accumulators 48, 48' may be charged to a pressure of 120 bar whereas the second pair 68, 68' are charged to 230 bar. When the header is detached, the first pair 48, 48' of accumulators provide the desired cushioning to the cylinders 40, 40'. When the header is attached, the second pair of accumulators 68, 68', charged to a higher pressure, provide the desired freedom of movement.

Additional accumulators may be provided in a similar fashion to deliver damping functionality targeted at different machine weight levels.

From reading the present disclosure, other modification will be apparent to persons skilled in the art. Such modifications may involve other features which are already known in the field of agricultural harvesting machines and component parts therefore and which may be used instead of or in addition to features already described herein.

## Claims

1. A self-propelled harvesting machine (10) comprising a suspension system and a crawler track assembly, the suspension system comprising a final drive unit having an input shaft (28) drivingly connected to a drive source, and an output shaft parallel with the input shaft (28) and connected to an attachment hub (24) on which the track assembly (16, 18) is mounted, the final drive unit being pivotally mounted to a chassis (22) around an axis which is coaxial with the input shaft, the suspension system further comprising a damper (40) between the chassis and the final drive; wherein the damper (40) comprises a fluid-filled cylinder; and wherein the suspension system further comprises a hydraulic control circuit (100) which is hydraulically connected to the cylinder, the control circuit comprising an accumulator (48) which controls the damping characteristics of the damper (40); **characterised in that** the control circuit (100) comprises a further accumulator (68) connected in parallel to the first-mentioned accumulator, the two accumulators (48, 68) charged with different pressures.

2. A self-propelled harvesting machine according to Claim 1, wherein the control circuit (100) further comprises a check valve (50) connected in parallel with a throttle valve (52) between the cylinder (40) and the accumulator (48).

3. A self-propelled harvesting machine according to any one of Claims 1 or 2, wherein the control circuit is closed.

4. A self-propelled harvesting machine according to any one of Claims 1 or 2, wherein the control circuit further comprises pump/drain means to adjust a resting position of a piston in the cylinder.

5. A self-propelled harvesting machine according to Claim 4, wherein the cylinder is a dual-action actuator.

6. A self-propelled harvesting machine according to Claim 1, wherein the cylinder is gas-charged.

## Patentansprüche

1. Selbstfahrende Erntemaschine (10) mit einem Federungssystem und einem Raupenfahrwerk, wobei das Federungssystem eine Endantriebseinheit mit einer Eingangswelle (28), die mit einer Antriebsquelle antreibend verbunden ist, und eine parallel zu der Eingangswelle (28) verlaufende Ausgangswelle aufweist, die mit einer Befestigungsnabe (24) verbunden ist, an der das Fahrwerk (16, 18) montiert ist, wobei die Endantriebseinheit an einem Chassis (22) um eine Achse schwenkbar montiert ist, die koaxial zu der Eingangswelle verläuft, wobei das Federungssystem weiterhin einen Dämpfer (40) zwischen dem Chassis und der Endantriebseinheit aufweist; wobei der Dämpfer (40) einen fluidgefüllten Zylinder aufweist; und wobei das Federungssystem weiterhin einen hydraulischen Steuer-/Regelkreis (100) aufweist, der hydraulisch mit dem Zylinder verbunden ist, wobei der Steuer-/Regelkreis einen Akkumulator (48) aufweist, der die Dämpfungseigenschaften des Dämpfer (40) steuert/regelt; **dadurch gekennzeichnet, dass**
der Steuer-/Regelkreis (100) einen weiteren Akkumulator (68) aufweist, der parallel zu dem erstgenannten Akkumulator angeschlossen ist, wobei die beiden Akkumulatoren (48, 68) mit unterschiedlichen Drücken beladen sind.

2. Selbstfahrende Erntemaschine nach Anspruch 1, wobei der Steuer-/Regelkreis (100) weiterhin ein Rückschlagventil (50) aufweist, das parallel zu einem Drosselventil (52) zwischen dem Zylinder (40) und dem Akkumulator (48) angeschlossen ist.

3. Selbstfahrende Erntemaschine nach Anspruch 1 oder 2, wobei der Steuer-/Regelkreis geschlossen ist.

4. Selbstfahrende Erntemaschine nach Anspruch 1 oder 2, wobei der Steuer-/Regelkreis weiterhin ein Pumpmittel/Ablassmittel zum Einstellen einer Ruheposition des Kolbens in dem Zylinder aufweist.

5. Selbstfahrende Erntemaschine nach Anspruch 4, wobei der Zylinder ein doppeltwirkender Aktuator ist.

6. Selbstfahrende Erntemaschine nach Anspruch 1, wobei der Zylinder gasgefüllt ist.

## Revendications

1. Machine de récolte automotrice (10) comprenant un dispositif de suspension et un ensemble de train à chenille, le dispositif de suspension comprenant une unité d'entraînement finale comportant un arbre d'entrée (28), couplé afin d'assurer l'entraînement à une source d'entraînement, et un arbre de sortie parallèle à l'arbre d'entrée (28) et couplé à un moyeu de liaison (24) sur lequel l'ensemble de train (16, 18) est monté, l'unité d'entraînement finale étant montée de manière à pouvoir pivoter sur un châssis (22) autour d'un axe qui est coaxial à l'arbre d'entrée, le dispositif de suspension comprenant, en outre, un amortisseur (40) entre le châssis et le dispositif d'entraînement final ; dans laquelle l'amortisseur (40) comprend un vérin rempli de fluide ; et dans laquelle le dispositif de suspension comprend, en outre, un circuit de commande hydraulique (100) qui est couplé de manière hydraulique au vérin, le circuit de commande comprenant un accumulateur (48) qui commande les caractéristiques d'amortissement de l'amortisseur (40) ; **caractérisée en ce que** le circuit de commande (100) comprend un accumulateur supplémentaire (68) raccordé parallèlement au premier accumulateur, les deux accumulateurs (48, 68) étant chargés à des pressions différentes.

2. Machine de récolte automotrice selon la revendication 1, dans laquelle le circuit de commande (100) comprend, en outre, un clapet (50) raccordé parallèlement à une vanne de réglage (52) entre le vérin (40) et l'accumulateur (48).

3. Machine de récolte automotrice selon l'une quelconque des revendications 1 ou 2, dans laquelle le circuit de commande est fermé.

4. Machine de récolte automotrice selon l'une quelconque des revendications 1 ou 2, dans laquelle le circuit de commande comprend, en outre, un moyen de pompage/purge afin de régler une position de repos d'un piston dans le vérin.

5. Machine de récolte automotrice selon la revendication 4, dans laquelle le vérin est un actionneur à double action.

6. Machine de récolte automotrice selon la revendication 1, dans laquelle le vérin est chargé en gaz.
